# EUROPEAN PATENT APPLICATION

(11) **EP 4 300 694 A1**
(43) Date of publication of application: **03.01.2024**
(21) Application number: 22182242.2
(22) Date of filing: 30.06.2022
(51) Int. Cl.: H01M 50/403, H01M 50/417, H01M 50/426, H01M 50/437, H01M 50/446, B01D 69/14, B01D 71/04, H01M 10/0525, H01M 10/05

(54) **SEPARATOR FOR A BATTERY, BATTERY AND METHOD FOR PRODUCING A SEPARATOR**

(71) Applicant: INL - International Iberian Nanotechnology Laboratory, 4715-330 Braga (PT)
(72) Inventor: Liu, Lifeng, 4715-330 BRAGA (PT); Tai, Zhixin, 4715-330 BRAGA (PT)
(74) Representative: Couto, Cláudia

(57) **Abstract**

The present invention relates to a separator for a battery comprising: a porous glass fiber substrate having a first major surface and an opposing second major surface, and particles of a negatively charged polymer, wherein the particles are distributed in the porous glass fiber substrate such that a concentration of the particles increases throughout a thickness of the porous glass fiber substrate from the first major surface to the second major surface thereof. The present invention further relates to a battery comprising said separator and a method for producing said separator.

## Description

### Field of the invention

The present invention relates to a separator for a battery. Further, the present invention relates to a battery comprising an anode, a cathode, an electrolyte, and said separator, as well as a method for producing said separator.

### Background Art

Alkali metal batteries (AMBs) have drawn considerable research interest in recent years because alkali metal (i.e., Li, Na, K) anodes provide substantially higher storage capacity than the conventional anode materials (e.g., graphite for Li-ion batteries, hard carbon for Na-ion batteries). Moreover, alkali metal batteries show significant potential for fast charging, since the alkali metal plating, in this case, replaces the kinetically limited alkali-ion intercalation process and therefore a high-rate performance can be achieved. However, mitigating dendrite formation/growth and enabling a stable solid-electrolyte interphase (SEI), are still major challenges to overcome for large-scale practical implementation of AMBs as high-energydensity energy storage devices. To address these challenges, a variety of strategies have been developed, such as the usage of three-dimensional (3D) current collectors, introduction of artificial protective SEI on the surface of alkali metal anodes, and optimization of the electrolyte used. Up to now, substantial efforts have been dedicated to direct modification of alkali metal anodes and electrolyte engineering to suppress dendrite growth so as to accomplish long-term operation. However, functionalization of the separator has only received little attention so far, particularly for sodium metal batteries (SMBs).

Analogous to electrode materials and electrolyte, a separator is one of the most important components in AMBs. The separator does not only physically and electrically isolate the anode from the cathode preventing short-circuiting, but also uptakes electrolyte and serves as the ion transport passage. Functionalizing the separator with ceramic materials or polymers has recently been demonstrated to be able to enhance its mechanical strength and therefore suppress lithium dendrite growth. However, those strategies cannot mitigate the formation of dendrites to a desired level. Further, surface-modified separators have also been proposed to promote homogeneous Li deposition and to regulate ionic transport. However, such existing inorganic modifiers are typically brittle. Furthermore, it is very challenging to maintain the intactness of inorganic layers used in modified separators and to avoid delamination during manufacturing of battery cells. This problem is even more outspoken when manufacturing cylindrical or pouch battery cells where a winding process is required.

Thus, there is a need for improved components, such as improved separators, for batteries.

### Summary of the invention

In view of the above, it is an object of the present invention is to provide an improved separator, an improved battery and an improved production method, which altogether alleviate the above-mentioned drawbacks.

Another object is to provide such a separator, designed for a battery, with enhanced mechanical strength.

Another object is to provide such a separator, designed for a battery, which regulates alkali metal plating on and stripping from the anode and which mitigates formation and consequently suppress dendrite growth.

Another object is to provide such a separator, designed for a battery, which enables a stable solid-electrolyte interphase (SEI).

Another object is to provide such a separator, designed for a battery, which promotes homogeneous alkali metal deposition and regulates ionic transport.

Another object is to provide such a separator, designed for a battery, with enhanced cycling performance and delayed capacity decay.

Another object is to provide such a separator, designed for a battery, which overcomes challenges for practical implementation of AMBs as highenergy-density energy storage devices.

Another object is to provide such a separator which is usable for a wide range of battery cells. Separators are used in a wide range of batteries to electrically separate anode from cathode, prevent short-circuiting, and in the meantime provide ion conduction pathways allowing alkali metal ions to move back and forth between anode and cathode.

Another object is to provide such a separator, which not only physically and electrically isolates the anode from the cathode preventing short-circuiting, but also uptakes electrolyte and serves as an ion transport passage.

Another object is to provide such a separator, designed for a battery, which is easy and less costly to manufacture.

To achieve at least one of the above objects and also other objects that will be evident from the following description, a separator having the features defined in claim 1 is provided according to the present invention. A battery including the separator is provided according to claim 11 and a method for producing the separator is provided according to claim 13. Preferred variations to the inventive concept will be evident from the dependent claims.

According to a first aspect there is provided a separator for a battery comprising: a porous glass fiber substrate having a first major surface and an opposing second major surface, and particles of a negatively charged polymer, wherein the particles are distributed in the porous glass fiber substrate such that a concentration of the particles increases throughout a thickness of the porous glass fiber substrate from the first major surface to the second major surface thereof.

The term "porous glass fiber substrate" relates to a generally non-woven material comprising glass fibers which are randomly laid across each other. The glass fiber substrate may however be composed of a woven material that is embedded with glass fibers. However, non-woven glass fiber substrates are generally mechanically stronger materials than woven glass fiber substrates due to its randomly arranged fibers making up the main framework. A porous material generally means a material that comprises pores, cavities or void spaces. Thus, the glass fiber substrate contains void spaces or pores, i.e. spaces that are not occupied by the main framework of fibers that make up the structure of the glass fiber substrate. The properties of the pores and the structure of the glass fiber substrate depend on the manufacturing parameters and the material used for the substrate. For instance, a pore size and a thickness of the porous glass fiber substrate may be tailored by selecting starting material and manufacturing process. The porous glass fiber substrate is generally moldable thus it may be fabricated in different forms, for e.g. spheres, plates, sticks, fibers, ultra-thin membranes, tubes and rings. The porous glass fiber substrate may be a commercially available glass fiber substrate.

The term "major surface" means that the substrate has two main surfaces which are opposing each other such that the substrate extends in between the two surfaces, more in one other direction than in the direction between the two surfaces, typically forming the shape of a sheet.

With the term "particle" means a small portion, part, body or element of matter. Herein the particles are typically of a micrometer and/or a nanometer size. Thus, the term "microparticles" are particles of a micrometer size, i.e. lager than 1000 nm and up to 1000 µm, and "nanoparticles" are particles of nanometer size, i.e. lager than 1000 pm and up to 1000 nm. The particles of the present invention may be of a homogeneous size or a mixed size ranging from nanometer size to micrometer size. Preferably the particles are of nanometer size.

The role of nanoparticles or nanospheres in the separator is that they may assist to re-distribute the ion flux and promote homogeneous deposition of alkali metal ions, such as Li+, Na+ or K+, meanwhile not blocking ion transport. The re-distribution is generally realized through interstitial of packed nanoparticles and also the local electric field induced by the negatively charged polymer.

With "negatively charged polymer" means that there are negative charges on the surface of the polymer. Whether the polymer is negatively charged or positively charged may depend on the solution pH and may be measured by the point of zero charge method. The point of zero charge (pzc) is the pH for which the net surface charge of the polymer is equal to zero. The pzc may typically be obtained by acid-base titrations. According to the present invention, negatively charged polymers assist in accelerating the transfer of alkali metal cations because of the locally enhanced electric field. At least a major part of the polymer is preferably "negatively charged", for achieving the accelerating effect. Different from small molecules, polymers have ultra-high molecular weight, leading to a possible heterogeneity of the polymer. In terms of "negatively charged", it may be attributed to effect of "the main group of polymers", which may attract some "positive particles" due to their ultra-strong negative effect. In the case of the present inventive concept, alkali metal ions, such as Li+ or Na+, may be "attracted" in the vicinity of polymer surface, redistributing the Li+ or Na+ flux, which may assist in improving the uniform deposition of these metal ions.

An advantage of the negatively charged polymer nanoparticles are that they will enhance the local electric field strength, boosting the transfer of alkali metal ions towards the anode upon charging of a battery.

The increase of the concentration of the nanoparticles in the porous glass fiber may be an "undulating increase", i.e. having a rising and falling increase, throughout the thickness of the porous glass fiber substrate from the first major surface to the second major surface such that the concentration of the nanoparticles is lowest at the first major surface and highest at the second major surface.

Several significant advantages are achieved by the separator of the present inventive concept.

An advantage of the separator of the present inventive concept is that apart from separating the anode from the cathode, thereby hindering short-circuiting, it also serves as an ion transport passage. But by impregnating negatively charged polymer particles into the glass fiber separator, it has the additional function of enabling homogenization of alkali metal deposition upon charging in alkali metal batteries, given that the packed nanoparticles re-distribute the ion flux and enhance local electric field promoting the transfer of alkali metal ions. In particular, the PTFE-embedded glass fiber separator is ion permeable. The presence of PTFE-nanoparticles is to regulate the ion flux.

Accordingly, yet another advantage of the present inventive concept of introducing the negatively charged polymer nanoparticles into the glass fiber separator is to homogenize alkali metal plating, i.e. to obtain homogeneous deposition of alkali metals on the anode during charging, thus suppressing dendrite growth and therefore eliminating associated battery failure.

Yet another advantage of the present invention is that it aims to solve the problems, mainly dendrite growth, of using alkali metal, including lithium, sodium or potassium, as an anode in alkali metal batteries, thereby improving the energy density.

The concentration of the particles in the porous glass fiber substrate may increase constantly throughout the thickness of the porous glass fiber substrate from the first major surface to the second major surface such that the concentration of the particles is lowest at the first major surface and highest at the second major surface.

The meaning of "increases constantly throughout" may be seen as a "gradual increase" which does not have to be "uniform" but the concentration of the particles in the porous glass fiber substrate still increases towards the second major surface. This is advantageous because it is better at controlling the ion flux.

The term "at the surface" means that the particles are embedded within the glass fiber substrate at a small distance from the surface. Thus, the particles are not coated onto or layered on the surface of the of the glass fiber substrate but resident in the glass fiber substrate in close proximity to the surface.

The porous glass fiber substrate may have a thickness ranging from 10 - 150 µm, preferably 50 µm.

The thickness of the glass fiber substrate is important. The thinner the better because this will reduce the ionic impedance during charge/discharge. However, the glass fiber substrate of the separator cannot be too thin. If a too thin glass fiber substrate is used in the separator, short-circuiting may occur. The glass fiber substrate may be in any shape and size. The separator may be tailored to a size relevant for a battery in which the separator is to be used.

The porous glass fiber substrate may have an average pore size ranging from 0.1 - 10 µm, preferably 0.3 - 2 µm, preferably about 0.5 µm.

The term "pore size" means the average extension of openings or holes in a material. The pore sizes for the porous glass fiber substrate given by the suppliers are usually nominal ones. In reality, for example under scanning electron microscopy (SEM) observation, the pore sizes are typically larger than the nominal ones. However, the pore sizes may be smaller than the nominal ones. The maximal pore size preferably ranges up to 2-3 µm. If the pore size is too large, it may induce short-circuiting when the separator is used in batteries.

The particles may have an average extension ranging from 30 nm - 2µm, preferably 100 - 300 nm, preferably about 210 nm.

The term "extension" means the average distance of the long diameter of the particle. Particles may have different shapes that may be defined by their relative dimensions of the long, the intermediate and the short axes of the particle. The ratio of the intermediate to long diameter and the ratio of short to intermediate diameter may be used to define four shape classes, which may be selected from: oblate, such as tabular or disc-shaped forms; prolate, such as rod-shaped; bladed; and equant, such as cubic or spherical forms. Preferably the particles are nanospheres.

The separator may further have an areal number density of the particles at the second major surface which may range from 10⁵ - 10⁹ particles per square millimeter of the separator. The areal number density of particles, such as nanoparticles, may be closely related to the average particle dimension. For nanoparticles with an average dimension of 210 nm, the areal number density of the particles may optimally be in the range of 0.5 x 10⁷ - 4 x 10⁷. However, if nanoparticles with a smaller size are used, such as 100 nm, the areal number density will need to be increased accordingly to achieve similar results. The nanoparticles or the nanospheres are generally filled or provided three-dimensionally in the glass fiber separator.

20 - 95% of a volume of the separator may be occupied by the particles, preferably 55 - 80% of a volume of the separator may be occupied by the particles. The separator may thus have a "filling degree" which is a volume % of the total volume of the separator.

The negatively charged polymer of the particles may be selected from the group consisting of: fluorine-containing polymers, chlorine-containing polymers, carboxylic acid-containing polymers, sulfonate-containing polymers, amide bond group-based polymers, and polyester-based polymers, and salts, derivatives and composites thereof.

The term "composite" means that there may be a "blend" or a "mixture" of the "negatively charged polymers" and some other materials, including inorganic fillers or some other polymers etc.

The fluorine-containing polymer may be selected from the group consisting of: polytetrafluoroethylene (PTFE), fluorinated ethylene propylene (FEP) and polyvinylidene difluoride (PVDF).

The terms "fluoropolymer" or "fluorine-containing polymer" is to be construed as a fluorocarbon-based polymer with multiple carbon-fluorine bonds. A fluoropolymer is hence a fluorine-containing polymer, which mainly includes a polymer based on many repeating monomeric units or monomers of fluoroalkyl substances. The fluoropolymer may be a homopolymer of one monomeric unit or a copolymer of two or more monomers. For example, polytetrafluoroethylene (PTFE) is a typical fluorine-containing polymer. The structure of Formula I shows the structure of PTFE wherein the monomeric unit is within the brackets and n denotes the number of repeating units wherein *n* may go towards infinity, preferably n is at least 100. The average molecular weight of the fluoropolymer may range from 1.4 × 10⁴ to 1.2 × 10⁶ g/mol.

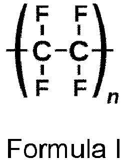

The fluorine-containing polymer may be polytetrafluoroethylene, which is advantageous in that polytetrafluoroethylene consists of carbon and fluorine only, which make PTFE hydrophobic and water repellant. Hence neither water nor water-containing substances wet PTFE.

Another example of a fluorine-containing polymer is fluorinated ethylene propylene (FEP) which is a copolymer of hexafluoropropylene and tetrafluoroethylene. It differs from the polytetrafluoroethylene (PTFE) resins in that it is melt-processable using conventional injection molding and screw extrusion techniques. FEP is very similar in composition to PTFE and share PTFE's useful properties of low friction and non-reactivity but is more easily formable. Another example of a fluorine-containing polymer is polyvinylidene difluoride (PVDF) which is a highly non-reactive thermoplastic fluoropolymer produced by the polymerization of vinylidene difluoride.

The chlorine-containing polymer may be represented by polyvinylchloride (PVC).

The carboxylic acid-containing polymers may be represented by poly(methacrylic acid).

The sulfonate-containing polymers may be selected from the group consisting of: sodium polystyrene sulfonate and polyvinyl sulfonic acid.

The amide bond group-based polymers may be selected from the group consisting of: polyamides, such as polyamide 6.6, i.e. nylon, polyamide 6, polyamide 6.10, polyamide 11 etc., and polyacrylamide (PAM). Polyamides are polymers with repeating units linked by amide bonds. It has a linear-chain structure. Polyacrylamide (PAM) is a polyolefin with the formula (-CH₂CHCONH₂-). Thus, it may be viewed as polyethylene with amide substituents on alternating carbons. Unlike various nylons, PAM is not a polyamide because the amide groups are not in the polymer backbone. PAM is highly water-absorbent, forming a soft gel when hydrated. Thus, the amide bond group-based polymers may be either polymers linked by amide bonds or polymers modified by amide bond groups.

The polyester-based polymers may be represented by polyhydroxyalkanoates (PHAs). PHAs are polyesters produced in nature by various microorganisms. PHAs may be either thermoplastic or elastomeric materials, with melting points ranging from 40 to 180 °C. Advantages with PHAs are that their mechanical properties may be altered by blending, modifying the surface or combining PHA with other polymers, or inorganic materials, thus enabling a wide range of applications. Further, PHAs may be biodegradable and biocompatible.

Preferably the negatively charged polymer of the particles may be polytetrafluoroethylene. An advantage with PTFE is that it provides a robust separator which provides with improved homogenization of alkali metal deposition upon charging in alkali metal batteries. It also provides enhanced control of alkali metal ion flux.

The negatively charged polymer of the particles may be polytetrafluoroethylene The areal number density of the particles at the second major surface may range from 0.5 × 10⁷ - 4 × 10⁷ particles per square millimeter. The areal number density of the PTFE particles may be 1.6 × 10⁷ particles per square millimeter. The particles may have an average extension of 210 nm.

According to a second aspect there is provided a battery comprising: an anode, a cathode, an electrolyte, and a separator according to the first aspect of the present invention, wherein the separator is arranged in between the anode and the cathode, wherein the electrolyte occupies void spaces of the separator, and wherein the first major surface of the separator is facing the cathode and the second major surface of the separator is facing the anode.

Herein, a "battery" may be a primary or a secondary battery, i.e. a nonchargeable or rechargeable battery, preferably the battery is rechargeable. The battery according to the present inventive concept may comprise at least one electrochemical cell, wherein a single anode and cathode are separated by electrolyte that is used to produce a voltage and current. The battery according to the present inventive concept may comprise a plurality of electrochemical cells.

In general, features of this aspect of the invention provide similar advantages as discussed above in relation to the previous aspect of the invention. Consequently, said advantages will not be repeated in order to avoid undue repetition. However, an advantage of the battery of the present inventive concept is that dendrite growth will be suppressed already at the first cycle of charging given the homogeneous distribution of alkali metal ion flux, which will unlikely induce dendrite formation and its subsequent growth over cycling. Another advantage of the battery of the present inventive concept is that is has enhanced cycling performance and delayed capacity decay.

The anode may comprise an element selected from the group consisting of: Li, Na and K, and combinations thereof.

An advantage of the anode of the present inventive concept is that it provides a homogeneous solid electrolyte interphase layer on the anode surface, protecting alkali metal or passivating it against reaction with the electrolyte during electrochemical cycling. Along with the advantage that the anode together with the separator may suppress dendrite growth on the anode, the anode may also enable a stable electrolyte/electrode interface which is less prone to undesired reactions.

The cathode may comprise a cathode material selected from the group consisting of: Li intercalation compound, a Na intercalation compound, or a potassium intercalation compound.

With the term "intercalation compound" means that these are cathode materials that allow Li+, Na+ and K+ to be inserted and extracted reversibly. These are the most commonly used types of cathode materials in the current secondary Li/Na/K batteries. Examples of cathode materials may be LiNiO₂, LiCoO₂, LiNiₓCo_{y}Mn_{z}O₂ (x+y+z = 1), LiNiₐCo_{b}Mg_{c}Al_{d}O₂ (a+b+c+d = 1), LiMnO₂, LiNi_{0.5}Mn_{0.5}O₂, Li₂Mn0₃, xLi₂MnO₃·(1-x)LiMO₂ (M = Ni, Co, Cr), LiMn₂O₄, LiNiₓMn_{y}O₄ (x+y = 2), LiFePO₄, LiMnPO₄, LiCoPO₄, LiNiPO₄, Li₂FeSiO₄, Li₂MnSiO₄, NaFePO₄, Na₍₁₋ₓ₎KₓPO₄, KFePO₄, Na_{0.7}FePO₄, Na_{1.5}VOPO₄F_{0.5}, Na₃V₂(PO₄)₃, Na₃V₂(PO₄)₂F₃, Na₂FePO₄F, NaFeF₃, NaVPO₄F, KVPO₄F, Na₃V₂(PO₄)₂F₃, Na_{1.5}VOPO₄F_{0.5}, Na₃V₂(PO₄)₃, NaV₆O₁₅, Na_{X}VO₂, Na_{0.33}V₂O₅, NaₓCoO₂, Na_{2/3}[Ni_{1/3}Mn_{2/3}]O₂, Naₓ[Fe_{1/2}Mn_{1/2}]O₂, NaₓMnO₂, λ-MnO₂, NaₓK₍₁₋ₓ₎MnO₂, Na_{0.44}MnO₂, Na₄Mn₉O₁₈, NaFe₂Mn(PO₄)₃, Na₂Ti₃O₇, Ni_{1/3}Mn_{1/3}Co_{1/3}O₂, Cu_{0.56}Ni_{0.44}HCF, NiHCF, NaCrO₂, KCrO₂, Na₃Ti₂(PO₄)₃, NiCo₂O₄, NaFe(CN)₆/C, KFe(CN)₆/C, NaV₁₋ₓCrₓPO₄F, Prussian blue, Prussian white, and combinations thereof. Preferably, the cathode material may comprise LiFePO₄ (LFP) or Na₃V₂(PO₄)₃F₃ (NVP).

In another embodiment of the present aspect, the cathode may comprise sulfur, selenium or oxygen/air. Sulfur, as a cathode material, works differently from the intercalation compounds. Alkali metal cations will form compounds with sulfur upon discharge, such as Li/Na/K-S, Li/Na/K-Se or Li/Na/K-O₂, which will then decompose upon charge. Thus, the battery chemistry is different from using an alkali metal intercalation compound as cathode material.

In relation to this disclosure, an "electrolyte" or "electrolyte layer" has the property to provide ions and ion mobility sufficient for the composition to function as an electrolyte in an electrochemical cell. The electrolyte may e.g. be selected amongst lithium hexafluorophosphate, LiPF₆ in ethylene carbonate/diethyl carbonate (LiPF₆/EC/DEC), LiPF₆/ethylene carbonate /dimethyl carbonate (LiPF₆/EC/DMC), lithium bis(trifluoromethanesulfonyl)-imide/1,2-dimethoxyethane/1,3-dioxolane (LiTFSi/DME/DOL), sodium hexafluorophosphate (NaPF₆) in ethylene carbonate/diethyl carbonate (NaPF₆/EC/DEC), sodium hypochlorite (NaClO₄) in ethylene carbonate/diethyl carbonate (NaClO₄/EC/DEC), or sodium bis(trifluoromethanesulfonate)imide (NaTFSI) in poly(ethylene oxide) (NaTFSI/PEO). For example, 1 M LiPF₆ or 1 M NaPF₆ in a mixture of ethylene carbonate (EC) and diethyl carbonate (DEC) may be used as electrolyte.

The present inventive concept according to the second aspect may also be extended to other metal-air batteries, such as zinc-air batteries where metal plating and stripping are the major processes happening at the anode upon charge and discharge. Thus, the battery according to the second aspect is not only limited to alkali metal batteries.

According to a third aspect there is provided a method for producing a separator according to the first aspect of the present invention, the method comprising: wetting a porous glass fiber substrate, the substrate having a first major surface and an opposing second major surface, with a dispersion of particles of a negatively charged polymer in a solvent,
evaporating the solvent of the dispersion from the porous glass fiber substrate while the particles migrate towards the second major surface of the porous glass fiber substrate under gravity assisted migration, such that a concentration of the particles increases throughout a thickness of the porous glass fiber substrate from the first major surface to the second major surface thereof.

With the term "gravity assisted migration" means that the particles will move towards the major surface that is pointing downwards, i.e. by the downward pull of the gravity force.

The wetting may comprise drop-casting or spraying the dispersion onto the porous glass fiber substrate or soaking the porous glass fiber substrate in the dispersion. For example, spraying may be pressure-based by nozzles or by electro-spraying.

The evaporating may further comprise heating the porous glass fiber substrate at a temperature ranging from 50-200 °C, preferably 90 °C, and for a period of time ranging from 2-24 h, preferably 10 h. The heating temperature is dependent on the polymer used. The heating temperature should be below the melting temperature of the polymer such that it does not become melted during evaporation of solvent.

In general, features of this aspect of the invention provide similar advantages as discussed above in relation to the previous aspect of the invention. Consequently, said advantages will not be repeated in order to avoid undue repetition.

However, an advantage, is that the method is a simple-to-conduct and cost-effective infiltration and evaporation method with less costly and easily accessible commercial materials.

A use of a separator according to the first aspect of the present invention in a battery according to the second aspect of the present invention may be provided to advantage.

Further features of, and advantages with, the present invention will become apparent when studying the appended claims and the following description. The skilled person will realize that different features of the present invention may be combined to create variants other than those described in the following, however the present invention is defined by the appended claims. Features of one aspect may be relevant to anyone of the other aspects.

### Brief description of the drawings

The above and other aspects of the present inventive concept will now be described in more detail, with reference to appended drawings showing variants of the present inventive concept. The figures should not be considered limiting the inventive concept, instead they are used for explaining and understanding the inventive concept.

As illustrated in the figures, the sizes of layers and regions are exaggerated for illustrative purposes and are thus provided to illustrate the general structures of variants of the present inventive concept.
Figure 1 shows a schematic illustration of a method for producing a separator.
Figure 2 shows a schematic illustration of a battery comprising an anode, a cathode, a separator and an electrolyte filled within the separator.
Figure 3 schematically illustrates a block scheme of a method for producing the separator.
Figure 4 shows a low-magnification cross-sectional SEM image of a PTFE-glass fiber separator.
Figure 5 shows a high-magnification cross-sectional SEM image of a PTFE-glass fiber separator.
Figure 6 shows a SEM image showing Li deposition in a half-cell with a PTFE-glass fiber separator.
Figure 7 shows a SEM image showing Na deposition in a half-cell with a PTFE-glass fiber separator.
Figure 8 shows a SEM image showing Li deposition in a half-cell with a bare glass fiber separator.
Figure 9 shows a SEM image showing Na deposition in a half-cell with a bare glass fiber separator.
Figure 10 shows an XPS spectrum of a Cu current collector after Li deposition.
Figure 11 shows an XPS spectrum of a Cu current collector after Na deposition.
Figure 12 schematically illustrates the distribution of the current density vector between anode and cathode in presence of one layer of PTFE-nanoparticles, without applying an external voltage.
Figure 13 schematically illustrates the distribution of the current density vector between anode and cathode in presence of two layers of PTFE-nanoparticles, without applying an external voltage.
Figure 14 schematically illustrates the distribution of the current density vector between anode and cathode in presence of three layers of PTFE-nanoparticles, without applying an external voltage.
Figure 15 schematically illustrates the distribution of the current density vector between anode and cathode in presence of one layer of PTFE-nanoparticles upon the application of an external voltage of 0.2 V.
Figure 16 schematically illustrates the distribution of the current density vector between anode and cathode in presence of two layers of PTFE-nanoparticles upon the application of an external voltage of 0.2 V.
Figure 17 schematically illustrates the distribution of the current density vector between anode and cathode in presence of three layers of PTFE-nanoparticles upon the application of an external voltage of 0.2 V.
Figure 18 schematically illustrates the anode thickness variation in presence of three PTFE-nanoparticles during Li plating when applying an external voltage of 0.2 V.
Figure 19 schematically illustrates the anode thickness variation in presence of five PTFE-nanoparticles during Li plating when applying an external voltage of 0.2 V.
Figure 20 schematically illustrates the anode thickness variation in presence of thirteen PTFE-nanoparticles during Li plating when applying an external voltage of 0.2 V.
Figure 21 shows the electrochemical performance in form of cycle stability of PTFE-glass fiber separator in Li//Li symmetric cell measured at 0.5 mA cm⁻².
Figure 22 shows the electrochemical performance in form of cycle stability of PTFE-glass fiber separator in Na//Na symmetric cell measured at 0.5 mA cm⁻².
Figure 23 shows the electrochemical performance in form of cycle stability of PTFE-glass fiber separator in Li//LFP full cell measured at 1C rate.
Figure 24 shows the electrochemical performance in form of cycle stability of PTFE-glass fiber separator in Na//LVP full cell measured at 1C rate.

### Detailed description

The present inventive concept will now be described more fully hereinafter with reference to the accompanying drawing, in which preferred variants of the inventive concept are shown. This inventive concept may, however, be embodied in many different forms and should not be construed as limited to the variants set forth herein; rather, these variants are provided for thoroughness and completeness, and fully convey the scope of the invention to the skilled person. Although individual features may be included in different variants, these may possibly be combined in other ways, and the inclusion in different variants does not imply that a combination of features is not feasible. In addition, singular references do not exclude a plurality. In the context of the present invention, the terms "a", "an" does not preclude a plurality.

The present invention discloses a novel separator 1, a battery 10 comprising said separator 1 and a method 100 for producing the novel separator 1.

The separator 1 described herein may be defined as a protection layer between an anode 20 and a cathode 30 in a battery 10, by hindering short-circuiting but enabling electrolyte 40 uptake and serving as an ion transport passage.

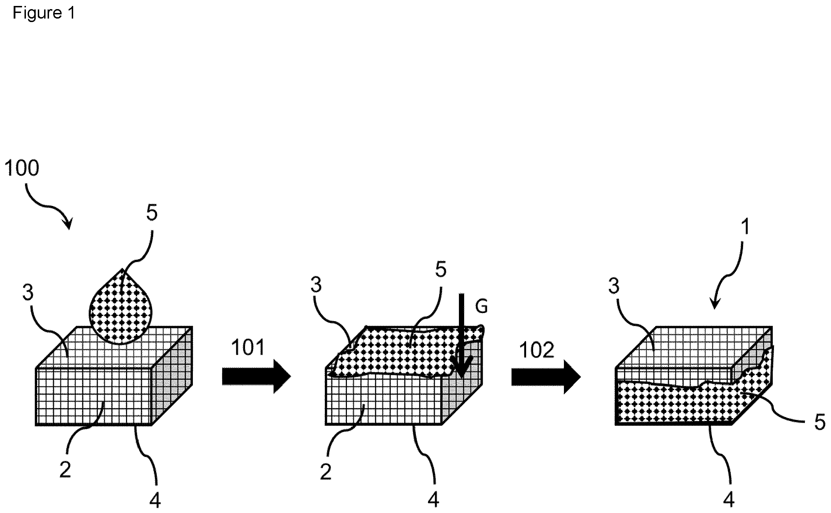

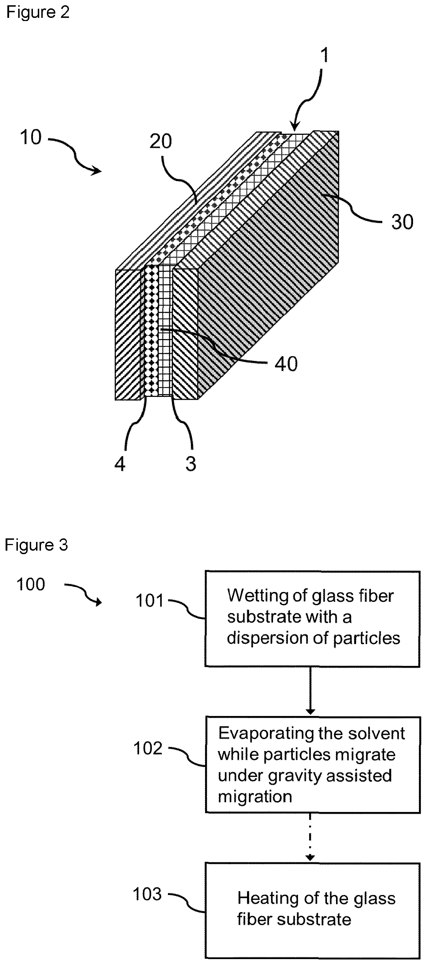

As schematically illustrated in Figure 1, the production of a separator 1 is typically done by a method 100 (also illustrated in Figure 3), that involves wetting 101, e.g. by drop-casting or spraying a dispersion onto a porous glass fiber substrate 2 or soaking the porous glass fiber substrate 2 in a dispersion of particles of a negatively charged polymer 5 e.g. a PTFE-suspension in a solvent. The suspension tends to move downwards under gravity assisted migration from a first major surface 3 during solvent evaporation 102, such that a concentration of the particles 5 increases throughout a thickness of the porous glass fiber substrate 2 from a first major surface 3 to a second major surface 4 thereof, e.g. leading to a high-density condensation of PTFE-nanoparticles on the second major surface 4 of the separator 1. The evaporating 102 may further comprise heating 103 the porous glass fiber substrate 2 at a temperature ranging from 50-200 °C, preferably 90 °C, and for a period of time ranging from 2-24 h, preferably 10 h, as shown in Figure 3.

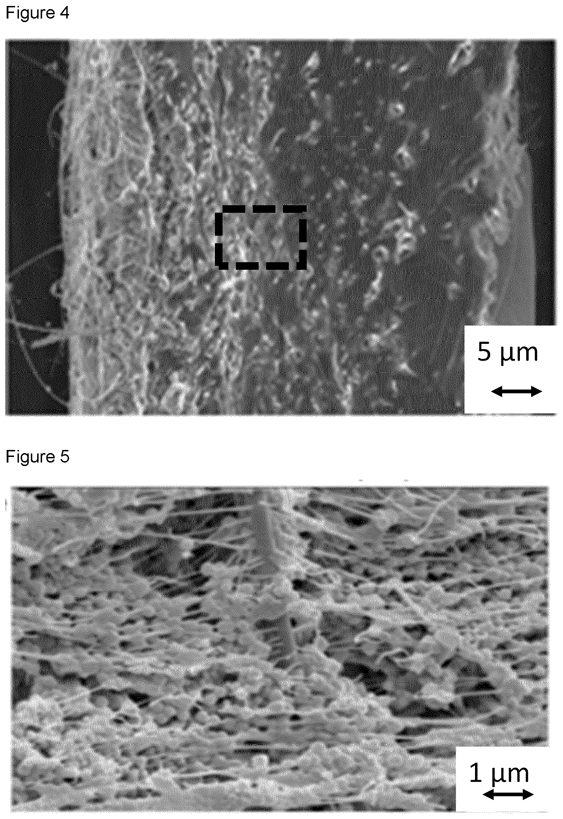

X-ray diffraction (XRD) examination of a PTFE-glass fiber separator 1 manufactured according to above shows a sharp peak at 18.0° and several weak peaks at 31.5°, 36.6°, 37.1°, and 41.3° that may be assigned to PTFE. In comparison, a bare glass fiber separator 2 which has a featureless XRD pattern, indicating the amorphous structure of glass fibers. Fourier transform infrared (FT-IR) transmission spectroscopy of a PTFE-glass fiber separator 1 manufactured according to above revealed several valleys at 501.4, 553.5, 638.3, 1151.3, and 1207.2 cm⁻¹, which correspond to the -CF₂- rocking, -CF₂- wagging, -CF₂- bending, -CF₂- symmetric stretching and -CF₂asymmetric stretching modes, respectively. Thus, confirming successful integration of PTFE-nanoparticles 5 into the separator 1. Further, the concentration of the particles 5 in the porous glass fiber substrate may increase constantly throughout the thickness of the porous glass fiber substrate 2 from the first major surface 3 to the second major surface 4 such that the concentration of the particles 5 is lowest at the first major surface 3 and highest at the second major surface 4. The porous glass fiber substrate 2 may have a thickness ranging from 10 - 150 µm, or preferably a thickness around 50 µm. Scanning electron microscopy (SEM) was further performed to examine and confirm the cross-sectional morphology of the glass fiber substrate 1. Compared to a pristine or bare glass fiber separator, the PTFE-glass fiber separator 1 shows a stark contrast in its cross-section (see Figure 4), illustrating that the PTFE-nanoparticles are concentrated on one side of the separator, i.e. the second major surface 4. A close inspection clearly reveals the spherical nature of PTFE, and that these nanospheres are densely packed (see Figure 5).

The porous glass fiber substrate 2 may have an average pore size ranging from 0.1 - 10 µm, preferably 0.3 - 2 µm, preferably about 0.5 µm. which thus is suitable for trapping or retaining particles 5 that may have an average extension ranging from 30 nm - 2µm, preferably 100 - 300 nm, preferably about 210 nm. Further, a filling degree may be in terms of that 20 - 95% of a volume of the separator 1 is occupied by the particles 5, preferably 55 - 80% of a volume of the separator 1.

When the glass fiber has been impregnated or filled with particles of negatively charged polymer 5, it may result in a separator with an areal number density of the particles 5 at the second major surface 4 that ranges from 10⁵ - 10⁹ particles per square millimeter of the separator 1. The negatively charged polymer of the particles 5 may be selected from the group consisting of: fluorine-containing polymers, chlorine-containing polymers, carboxylic acid-containing polymers, sulfonate-containing polymers, amide bond group-based polymers, and polyester-based polymers, and salts, derivatives and composites thereof. Preferably, the negatively charged polymer of the particles 5 may be polytetrafluoroethylene, wherein the areal number density of the PTFE-particles 5 at the second major surface 4 typically ranges from 0.5 × 10⁷ - 4 × 10⁷ particles per square millimeter, preferably 1.6 × 10⁷ particles per square millimeter, and wherein the PTFE-particles have an average extension of 210 nm.

In figure 2, it is shown a battery 10 comprising: an anode 20, a cathode 30, an electrolyte 40, and a separator 1 that may be arranged in between the anode 20 and the cathode 30, wherein the electrolyte 40 occupies void spaces of the separator 1, and wherein the first major surface 3 of the separator 1 is facing the cathode 30 and the second major surface 4 of the separator 1 is facing the anode 20. The anode 20 may comprise an element selected from the group consisting of: Li, Na and K, and combinations thereof.

Thus, to further investigate how the introduction of PTFE-nanoparticles 5 into the separator 1 influences Li and Na electrodeposition during charging in a battery 10, coin cells were assembled consisting of a separator 1 according to the present inventive concept wherein the particles of the negatively charged polymer were PTFE-nanoparticles, and a bare glass fiber separator 2, respectively, sandwiched by a Li or Na metal disk and a Cu foil current collector of the half-cell.

The term "half-cell" means that an alkali metal anode is paired with a copper (Cu) foil current collector separated by a separator 1 according to the invention, which is mainly used to study the Coulombic efficiency of alkali metal plating and stripping upon charge and discharge of batteries.

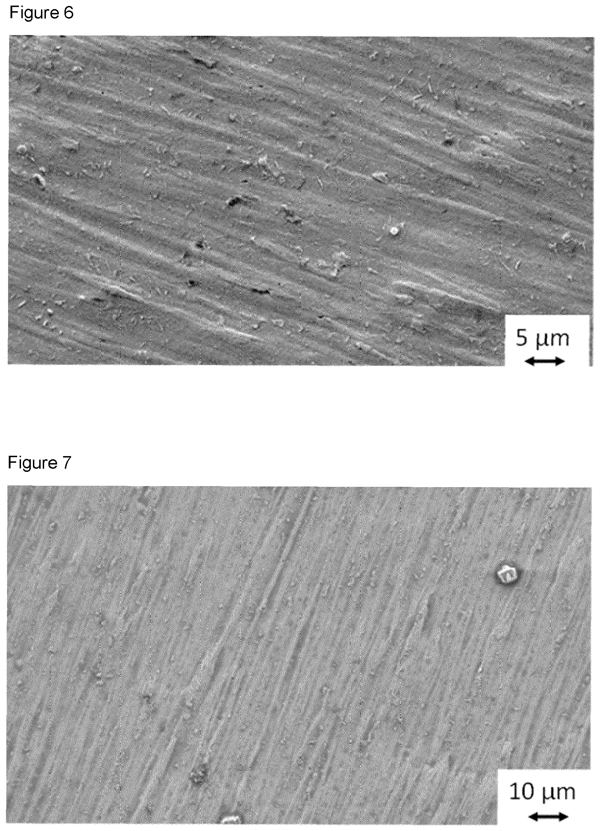

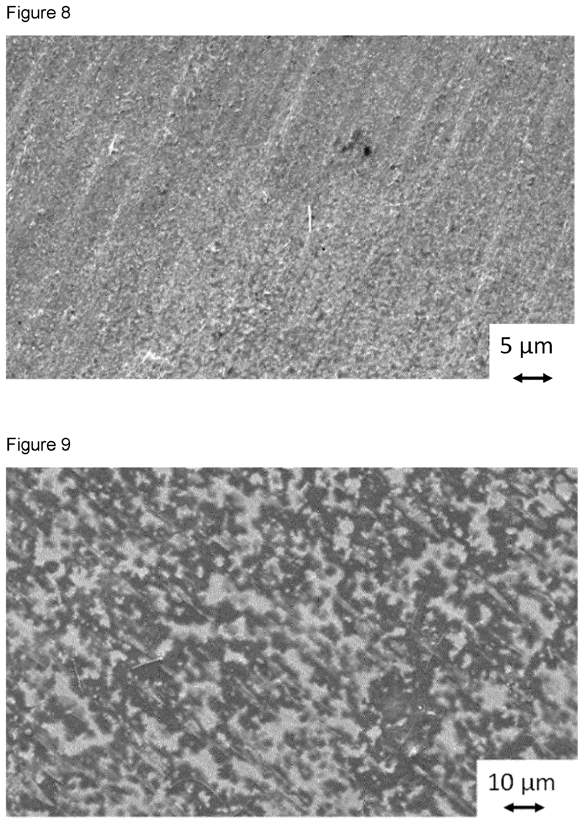

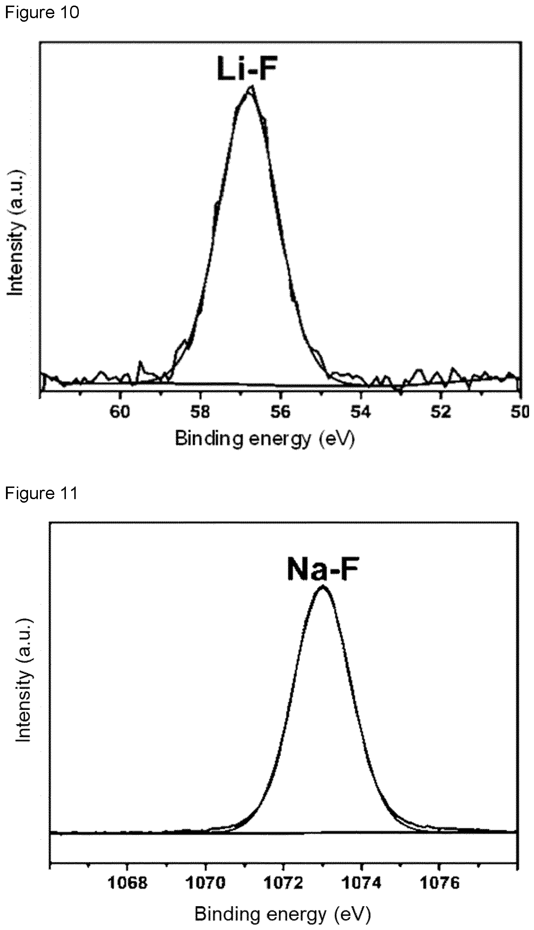

Further, 1 M LiPF₆ or 1 M NaPF₆ in a mixture of ethylene carbonate (EC) and diethyl carbonate (DEC) was used as the electrolyte 30. A current density of 0.5 mA cm⁻² was applied for 2 hours for either Li or Na metal plating. As shown in Figure 6 and Figure 7, respectively, the Li and Na deposits on Cu in Li and Na half-cells show a continuous, uniform and relatively smooth surface, in the presence of PTFE-nanoparticles 5 in the glass fiber separator 1. In contrast, using the bare glass fiber separator, a "mossy" deposit was observed in the Li half-cell (see Figure 8), and a discontinuous, island-like microstructure found in the Na half-cell (see Figure 9). However, when analyzing the surface chemistry of the deposits using X-ray photoelectron spectroscopy (XPS), it was found that the Li and Na deposits show Li-F and Na-F bonding on their surfaces (see Figure 10 and Figure 11, respectively). This implies that the presence of PTFE-nanoparticles 5 in the glass fiber separator 1 homogenizes the ion flux distribution during the plating, resulting in a uniform and flat Li and Na metal thin film. Moreover, the re-distribution of ion flux may facilitate the formation of alkali metal fluoride, which is conductive to ion conduction.

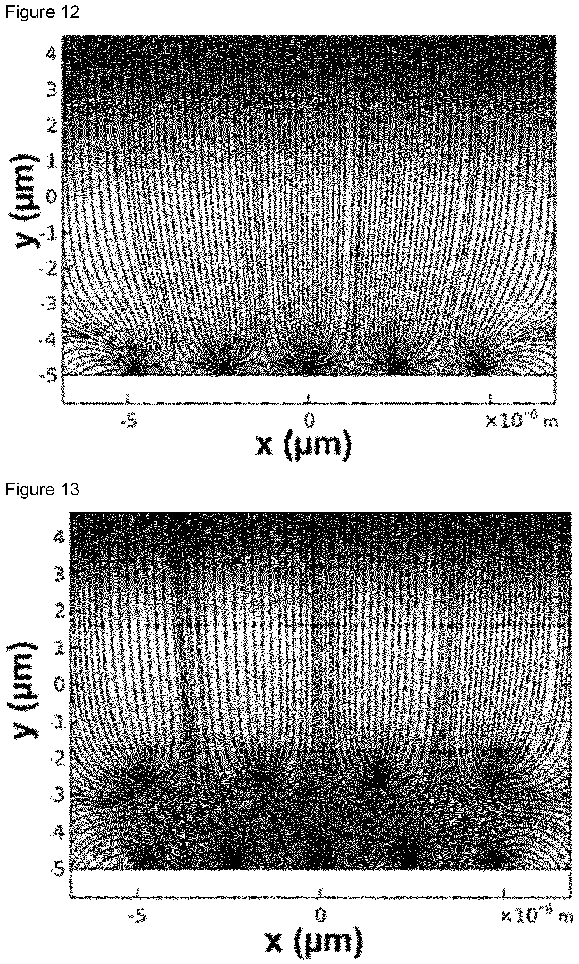

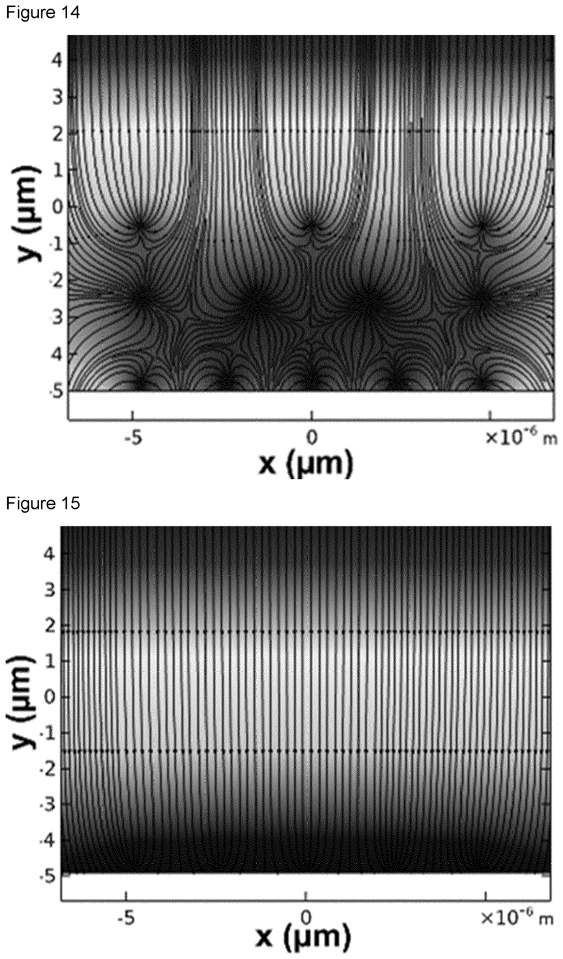

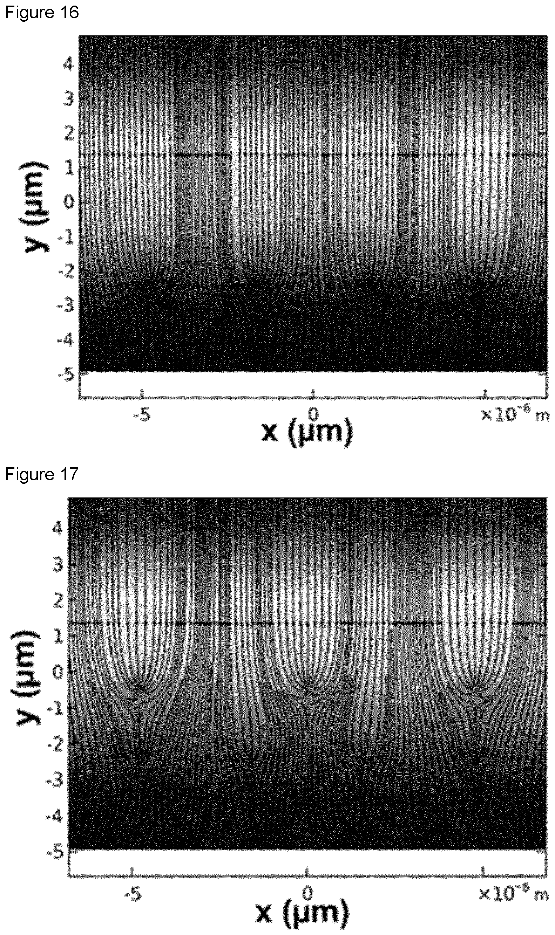

In order to gain insights into the uniform deposition of Li and Na metals in presence of PTFE-nanoparticles 5 within the glass fiber separator 1, COMSOL Multiphysics was used to simulate the distribution of alkali ion flux (reflected by the current density vector) and local electric field, using the tertiary current distribution and the Nernst-Planck model. In the absence of PTFE- nanoparticles 5 between anode 20 and cathode 30 and an external voltage, the current density vector and the electric field between two electrodes show a non-uniform spatial distribution, which turns to be uniform when an external voltage of 0.2 V is applied. To simulate the influence of PTFE-nanoparticles 5, negatively charged point charges were introduced nearby the anode 20, given that PTFE is typically negatively charged and that the size of nanoparticles may be rather small in comparison to the electrode surface and may therefore be considered as point charges. The introduction of PTFE-nanoparticles 5 changes the distribution of current density vectors and electric field (see Figures 12, 13 and 14), but the distribution is nondirectional and chaotic. Figures 12, 13 and 14 show the distribution of the current density vector between anode and cathode in presence of the respective one, two or three layers of PTFE-nanoparticles, without applying an external voltage. These different layers may be seen in the figures 12, 13 and 14 as a darker concentration of the electric field lines. After applying an external voltage of 0.2 V, current density vectors turn to be more directional and locally intensified, and the electric field distribution becomes more uniform (see Figures 15, 16 and 17) compared to the zero-voltage conditions. Figure 15 shows the current density vector between anode and cathode in presence of one layer of PTFE-nanoparticles, whereas Figures 16 and 17 show the current density vector between anode and cathode in presence of two layers and three layers of PTFE-nanoparticles, respectively. This may be particularly predominant as the layer of PTFE-nanoparticles increases. The enhanced localized electric field may facilitate fast transportation of Li+ and Na+ cations toward the anode 20. This was confirmed experimentally by measuring the transference number of Li+ and Na+ cations. The Li+ and Na+ transference numbers in the cells containing the PTFE-glass fiber separator 1 are 0.81 and 0.93, respectively, about 2 and 3 times higher than those obtained in the cells comprising a bare glass fiber separator 2, i.e. 0.41 for Li cells and 0.32 for Na cells. This clearly demonstrates that unlike the previously reported separators textured with inorganic materials on their surfaces for enhancing the mechanical robustness, introducing negatively charged polymeric PTFE-nanoparticles 5 not only endows drastically improved flexibility in cell production, but also helps accelerate the inherent Li+ and Na+ transportation.

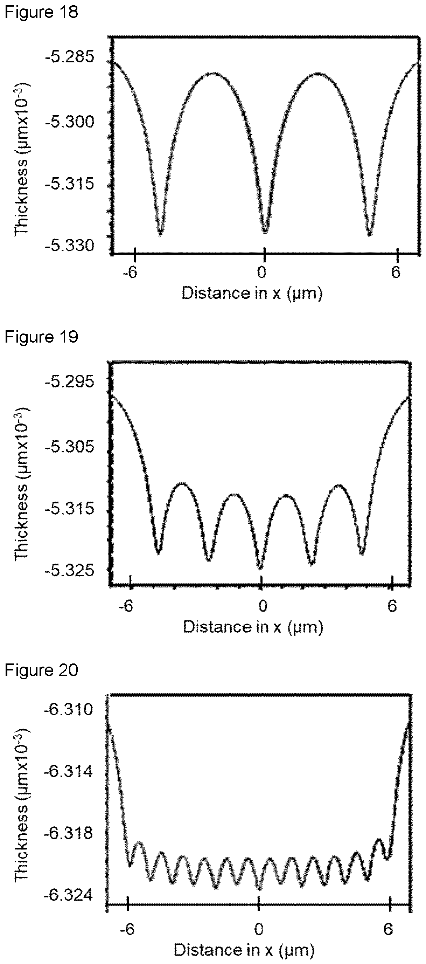

To further scrutinize the deposition of Li and Na metals across the PTFE-glass fiber separator 1, it was investigated how the spatial distribution of PTFE-nanoparticles 5 affects the thickness variation of the metal deposit. To do so, 3, 5 and 13 negative point charges were introduced, respectively, nearby the anode 20 of Li cells to simulate the different packing densities of PTFE-nanoparticles 5 in the glass fiber separator 1. A large thickness variation of 0.035 nm was observed in the presence of three PTFE-nanoparticles 5 (see Figure 18), which would give rise to a deposit with large feature sizes. However, the variation dramatically drops as the number of PTFE-nanoparticles increases to 5 (see Figure 19, variation: ca. 0.014 nm) and 13 (see Figure 20, variation: 0.002 nm). This will significantly reduce the feature size of the deposit, leading to more uniform deposition of Li and Na metals and thereby suppressing the dendrite formation. Simulations of the Na plating process give rise to similar results.

The role of PTFE-nanoparticles in suppressing the dendrite growth and extending the cycle life of Li and Na metal batteries 10 was further corroborated in Li//Li and Na//Na symmetric cell tests.

A "symmetric cell" consists of two identical alkali metal electrodes as working and counter electrodes, respectively, separated by a separator according to the invention, which is primarily used for assessing the long-term cycling performance of the electrode.

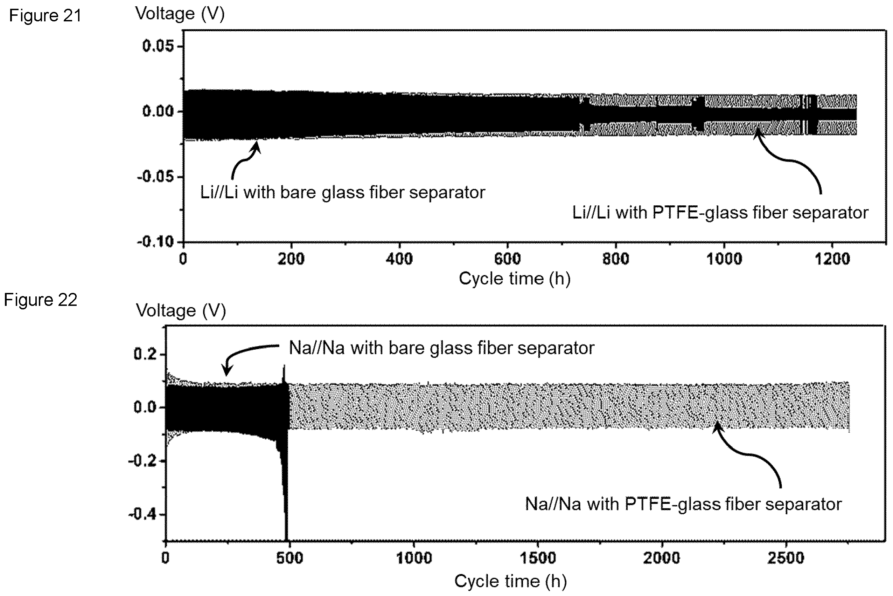

The symmetric cells consisted of two symmetric Li or Na metal foils as the anode 20 and cathode 30, respectively, separated by either a PTFE-glass fiber separator 1 or a bare glass fiber separator 2. The Li//Li cell with the bare glass fiber separator 2 shows a polarization voltage of 0.018 V at 0.5 mA cm⁻² (capacity: 0.5 mAh cm-2, black trace in Figure 21). The polarization voltage abruptly dropped to 0.005 V after 718 h and varied irregularly afterward, indicating that short-circuiting occurred somewhere in the cell due to the Li dendrite growth upon continuous cycling. In stark contrast, the Li//Li cell containing a PTFE-glass fiber separator 1 exhibited a stable polarization under the same conditions up to 1245 h, without a sign of short-circuiting (blurred trace in Figure 21). The morphology of the Li metal electrode was examined after plating at 0.5 mA cm⁻² for 200 cycles. In presence of the PTFE-nanoparticles 5, the Li foil shows a comparatively smooth surface morphology, while for the cell containing a bare glass fiber separator 2, dendritic Li appeared after 200 cycles of plating under the same conditions. The promotional effect of PTFE-nanoparticles on the cyclability was more prominent in the Na//Na symmetric cells (see Figure 22), where the cell with a PTFE-glass fiber separator 1 could be reversibly charged and discharged for 1375 cycles (2750 h) with a fairly stable polarization voltage (ca. 0.08 V), showing performance much better than the cell with a bare glass fiber separator that failed after only 250 cycles (500 h). Moreover, the Na metal electrode surface after cycling in the former cell looks much smoother than that in the latter cell, with no or almost no dendrites and mossy structures observed.

Furthermore, the effectiveness of PTFE-nanoparticles impregnation toward the cycle stability was also verified in the full cell tests. A "full cell" comprises an alkali metal anode 20, a corresponding cathode 30 and a separator 1 according to the invention in between. This represents the configuration of the actual working battery cells 10.

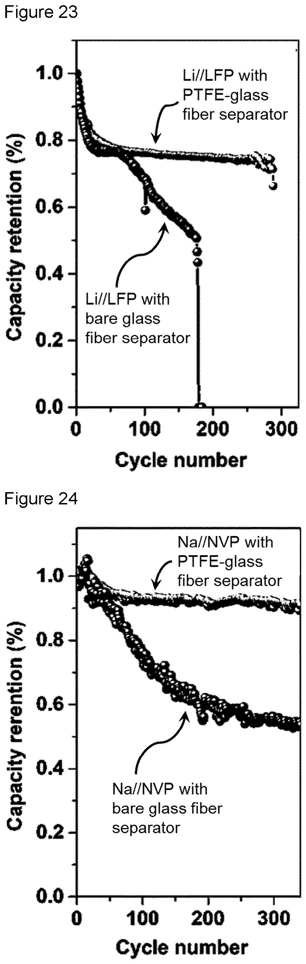

In this case, commercial LiFePO₄ (LFP) and homemade Na₃V₂(PO₄)₃F₃ (NVP), according to the Examples of the present invention were used as the active cathode materials in Li and Na cells, respectively. Both Li//LFP cells containing a PTFE-glass fiber separator 1 and a bare glass fiber separator 2 showed a capacity drop in the beginning of cycling at 1C rate (see Figure 23), likely resulting from the fast consumption of the electrolyte after growing up of Li dendrite. With "1C" means that batteries may be charged/discharged fully in one hour. These are standard testing conditions used for assessing cycle stability. Nonetheless, for the PTFE-glass fiber separator 1 containing Li//LFP cell, the capacity retained more than 70% of the initial value after about 290 cycles, while the Li//LFP cell without the PTFE-glass fiber separator showed a rapid decay after 60 cycles and eventually failed after 175 cycles. Remarkably, by using the PTFE-glass fiber separator 1, the capacity retention of the Na//NVP cell could reach 91% after 340 cycles (see Figure 24), markedly outperforming the cell containing just a bare glass fiber separator 2.

### Experimental details

### Chemicals and materials

Polytetrafluoroethylene dispersion (60 wt.% PTFE-nanoparticles in H₂O), glass fiber separators (Whatman, CAT No. 1802-150), hexadecyltrimethylammonium (CTAB, ≥96%), sodium fluoride (NaF, >99.5%), vanadium oxide (V₂O₃, >99.7%), ammonium dihydrogen phosphate (NH₄H₂PO₄, >98%), phosphoric acid (H₃PO₄, >85 wt.%), lithium disk, sodium ingots, and all other chemicals and solvents used for preparing the electrolyte including LiPF₆, NaPF₆, ethylene carbonate (EC, anhydrous ≥ 99.0%), and diethyl carbonate (DEC, anhydrous ≥ 99.0%), were all purchased from Sigma-Aldrich and used as received. The LiFePO₄ was acquired from Contemporary Amperex Technology Co., Limited (CATL).

### Preparation of PTFE-glass fiber separators

The PTFE dispersion was used to prepare PTFE-glass fiber separators 1 without dilution. Typically, 60 µL of PTFE dispersion was spread onto the surface of a circular glass fiber separator 2 disk with the diameter of 10 mm. After the dispersion got fully wetted into the separator, the sample was transferred into a ventilated fume hood and kept still for 12 h. Afterward, the PTFE-glass fiber separator 1 was put into a vacuum oven and heated at 120 °C for 12 h to completely remove the moisture, before it was taken into the Arfilled glovebox for usage in coin cells.

### Synthesis of Na₃V₂(PO₄)₃F₃ (NVP) cathode materials

The NVP cathode materials were synthesized following a modified procedure according to previous reports. In brief, 3.645 g CTAB were dissolved in a 120 mL mixture of absolute ethanol and deionized water (12:1, v/v). After agitated under N₂ atmosphere for 2 h, 0.63 g NaF and 0.75 g V₂O₃ were added into the mixed solution. Following another 30 min agitation, 1.725 g NH₄H₂PO₄ were poured into the previous mixture and the solution was constantly stirred for 24 h under N₂ atmosphere. Subsequently, the resulting black precipitates were collected and dried in a N₂ flow at room temperature. After ground in a mortar, the dried solid product was placed into a tube furnace that was pre-heated at 120 °C, and then calcinated at 750 °C under argon atmosphere for 6 h. The ramping rate was set to 5 °C min⁻¹, and the furnace was cooled naturally down to room temperature.

### Materials characterization

The morphology of the PTFE-glass fiber separator, metallic Li and Na electrodes, and as-prepared NVP powders was examined by scanning electron microscopy (SEM, FEI Quanta 650 FEG), and their crystal structure was characterized by X-ray diffraction (XRD) on an X'Pert PRO diffractometer (PANalytical) set at 45 kV and 40 mA, using Cu *K_{α}* radiation (*λ* = 1.541874 Å) and a PIXcel detector. The Fourier transform infrared (FT-IR) spectra were acquired using a VERTEX 80v vacuum FTIR spectrometer. The surface chemistry of the electrodes was characterized using an ESCALAB 250Xi X-ray photoelectron spectrometer (XPS) with an Al source (1486.6 eV). The take-off angle between the electrode surface and the analyzer was 90° and the signals of C1s, Li1s, Na1s and F1s core-levels were collected in an area of analysis of 650 × 400 µm².

### Simulations

Simulations were carried out using COMSOL Multiphysics software with implemented finite element solver. The "Electrodeposition, Tertiary Nernst-Planck" model was employed to simulate the local electric field distribution, and the "Deformation geometry" module was used to simulate the non-uniform variation of electrode boundaries during the deposition process. A point potential of -0.01 V was applied to simulate the influence of negatively charged PTFE-nanoparticles on the electric field distribution and Li/Na deposition. The initial concentration of alkali metal ions was set to 1000 mol m⁻³, and the exchange current density was defined as 100 A m⁻². The temperature was fixed at 293.15 K. For Li and Na deposition, the anode and cathode potentials were set to 0.1 and -0.1 V, respectively.

### Cell assembly and electrochemical testing

All electrochemical tests were performed using 2032 coin cells assembled in a glovebox filled with 99.999% argon gas. For the half cells tests, a piece of Li or Na foil (10 mm in diameter, 1 mm in thickness) and a circular Cu foil with the same area were used as the working and counter electrodes, respectively, separated by either a pristine glass fiber or a PTFE-glass fiber separator with a diameter of 12 mm. 1 M LiPF₆ in EC/DEC or 1 M NaPF₆ in EC/DEC was used as the electrolyte for Li or Na cells, respectively. A similar configuration was also employed for symmetric cells, but in these cases two symmetric Li or Na metal foils were used.

For fuel cell tests, the cathode 30 was firstly prepared according to the procedures reported previously. In brief, the LFP or NVP active materials were mixed with Super P^{®} and polyvinylidene fluoride (PVDF) binder in a weight ratio of 8:1:1 (for LFP) or 7:2:1 (for NVP) in a powder mixer, in the presence of n-methyl-pyrrolidone (NMP). The obtained slurry was then bladecast on an aluminum current collector. The loading density of the LFP and NVP active materials is around 1.25 and 2.55 mg cm⁻², respectively. The galvanostatic charge/discharge tests were performed using a WonATech battery test station (WBCS3000S1) for both symmetric and full cells of Li and Na. The cyclic voltammetry (CV) of all cells was conducted on a Biologic VMP3 electrochemical workstation. For the Li//LFP and Na//NVP full cells, 1 C corresponds to a charge/discharge current density of 150 mA g⁻¹ and 100 mA g⁻¹, respectively.

## Claims

1. A separator (1) for a battery (10) comprising:
a porous glass fiber substrate (2) having a first major surface (3) and an opposing second major surface (4), and
particles of a negatively charged polymer (5),
wherein the particles (5) are distributed in the porous glass fiber substrate (2) such that a concentration of the particles (5) increases throughout a thickness of the porous glass fiber substrate (2) from the first major surface (3) to the second major surface (4) thereof.

2. The separator (1) according to claim 1, wherein the concentration of the particles (5) in the porous glass fiber substrate increases constantly throughout the thickness of the porous glass fiber substrate (2) from the first major surface (3) to the second major surface (4) such that the concentration of the particles (5) is lowest at the first major surface (3) and highest at the second major surface (4).

3. The separator (1) according to claim 1 or 2, wherein the porous glass fiber substrate (2) has a thickness ranging from 10 - 150 µm, preferably 50 µm.

4. The separator (1) according to any one of claims 1-3, wherein the porous glass fiber substrate (2) has an average pore size ranging from 0.1 - 10 µm, preferably 0.3 - 2 µm, preferably about 0.5 µm.

5. The separator (1) according to any one of claims 1-4, wherein the particles (5) have an average extension ranging from 30 nm - 2µm, preferably 100 - 300 nm, preferably about 210 nm.

6. The separator (1) according to any one of claims 1-5, wherein an areal number density of the particles (5) at the second major surface (4) ranges from 10⁵ - 10⁹ particles per square millimeter of the separator (1).

7. The separator (1) according to any one of claims 1-6, wherein 20 - 95% of a volume of the separator is occupied by the particles (5), preferably 55 - 80% of a volume of the separator.

8. The separator (1) according to any one of claims 1-7, wherein the negatively charged polymer of the particles (5) is selected from the group consisting of: fluorine-containing polymers, chlorine-containing polymers, carboxylic acid-containing polymers, sulfonate-containing polymers, amide bond group-based polymers, and polyester-based polymers, and salts, derivatives and composites thereof.

9. The separator (1) according to any one of claims 1-8, wherein the negatively charged polymer of the particles (5) is polytetrafluoroethylene.

10. The separator (1) according to claim 9, wherein the areal number density of the particles at the second major surface ranges from 0.5×10⁷ - 4×10⁷ particles per square millimeter, preferably 1.6×10⁷ particles per square millimeter, and wherein the particles have an average extension of 210 nm.

11. A battery (10) comprising:
an anode (20),
a cathode (30),
an electrolyte (40), and
a separator (1) according to any one of claims 1-10,
wherein the separator (1) is arranged in between the anode (20) and the cathode (30),
wherein the electrolyte (40) occupies void spaces of the separator (1), and
wherein the first major surface (3) of the separator (1) is facing the cathode (30) and the second major surface (4) of the separator (1) is facing the anode (20).

12. The battery (10) according to claim 11, wherein the anode (20) comprises an element selected from the group consisting of: Li, Na and K, and combinations thereof.

13. A method (100) for producing a separator according to any one of claims 1-10, the method comprising:
wetting (101) a porous glass fiber substrate (2), the substrate having a first major surface (3) and an opposing second major surface (4), with a dispersion of particles of a negatively charged polymer (5) in a solvent,
evaporating (102) the solvent of the dispersion from the porous glass fiber substrate (2) while the particles (5) migrate towards the second major surface (4) of the porous glass fiber substrate (2) under gravity assisted migration, such that a concentration of the particles (5) increases throughout a thickness of the porous glass fiber substrate (2) from the first major surface (3) to the second major surface (4) thereof.

14. The method (100) according to claim 13, wherein the wetting (101) comprises drop-casting or spraying the dispersion onto the porous glass fiber substrate (2) or soaking the porous glass fiber substrate (2) in the dispersion.

15. The method (100) according to claim 13 or 14, wherein the evaporating (102) further comprises heating (103) the porous glass fiber substrate (2) at a temperature ranging from 50-200 °C, preferably 90 °C, and for a period of time ranging from 2-24 h, preferably 10 h.
